# EUROPÄISCHE PATENTSCHRIFT

(11) **EP 1 747 413 B1**
(45) Veröffentlichungstag und Bekanntmachung des Hinweises auf die Patenterteilung: **08.10.2008**
(21) Anmeldenummer: 05736955.5
(22) Anmeldetag: 20.04.2005
(51) Int. Cl.: F25B 41/06, F25B 47/02, F25D 21/00, F25D 21/08, F25D 21/12

(54) **STEUEREINRICHTUNG FÜR EINE KÄLTE- ODER KLIMAANLAGE**
CONTROL UNIT FOR A REFRIGERATION OR AIR CONDITIONING SYSTEM
DISPOSITIF DE COMMANDE POUR UNE INSTALLATION FRIGORIFIQUE OU DE CLIMATISATION

(30) Priorität: 18.05.2004 DE 102004024664
(43) Veröffentlichungstag der Anmeldung: 31.01.2007
(73) Patentinhaber: EMERSON ELECTRIC GmbH & Co. OHG, 71332 Waiblingen (DE)
(72) Erfinder: BERSCH, Hans-Jürgen, 52152 Simmerath (DE)
(74) Vertreter: Manitz, Gerhart
(86) Internationale Anmeldenummer: PCT/EP2005/004239
(87) Internationale Veröffentlichungsnummer: WO 2005/116541

(56) Entgegenhaltungen:
- EP-A- 1 348 920
- EP-A- 1 367 344
- GB-A- 2 348 947
- US-B1- 6 505 476

## Beschreibung

Die Erfindung betrifft eine Steuereinrichtung zum Ansteuern zumindest einer Komponente einer Kälte- oder Klimaanlage mit einem Verdampfer, dem Verdampfer im Kältemittelkreislauf vor- und/ oder nachgeschalteten Sensoren und einem elektronischen Expansionsventil, wobei die Steuereinrichtung zur Beaufschlagung des Expansionsventils in Abhängigkeit von von den Sensoren gelieferten Signalen ausgelegt ist.

Die US-B1-6 505 476 offenbart eine steuereinrichtung gemäß dem Oberbegriff des Anspruchs 1.

Kälte- und Klimaanlagen der vorstehend genannten Art, deren Kältemittelkreislauf neben dem Expansionsventil und dem Verdampfer auch noch einen Verdichter sowie einen Verflüssiger aufweisen, sind aus dem Stand der Technik in unterschiedlichsten Ausführungsformen bekannt und werden beispielsweise zum Kühlen von Lebensmitteln oder zum Klimatisieren von Räumen eingesetzt. Für einen kontinuierlichen, effizienten und störungsfreien Betrieb derartiger Kälte- und Klimaanlagen ist es nötig, die jeweils eingesetzten Verdampfer, die während des Betriebes vereisen, regelmäßig abzutauen. Dabei ist es ein Ziel, den Abtauvorgang möglichst schnell durchzuführen, um beispielsweise in einer Kälteanlage gekühlte Lebensmittel nicht unnötig lange erhöhten Temperaturen auszusetzen.

Während des Abtauvorgangs muss der im Kältemittelkreislauf vorhandene Kältemittelstrom beim Abtauen mittels Heißgas oder Kaltgas umgeleitet oder unterbrochen werden, um so zu ermöglichen, dass das zum Abtauen verwendete Heißgas oder Kaltgas durch den Verdampfer und ggf. durch das Expansionsventil geleitet werden kann. Beim Abtauen über die Umgebungsluft oder über eine elektrische Abtauheizung muss der Kältemittelstrom nicht notwendigerweise umgeleitet, jedoch zumindest unterbrochen werden, damit der Verdampfer während des Abtauvorgangs nicht durch das Kältemittel gekühlt wird, was dem Abtauvorgang entgegenwirken würde.

Die Unterbrechung oder Umleitung des Kältemittelstroms während des Abtauvorgangs wird üblicherweise durch Magnetventile bewirkt, welche sich an geeigneter Stelle im Kältemittelkreislauf befinden, wobei die Position der genannten Magnetventile entweder nahe beim Verdampfer, in vielen Anwendungsfällen aber auch relativ weit entfernt vom Verdampfer liegen kann.

Während des Abtauvorgangs muss beim Einsatz von elektronischen Expansionsventilen ferner sichergestellt sein, dass diese in einen statischen Zustand bewegt werden. Falls nämlich der während des normalen Betriebs gegebene Regel- oder Steuervorgang während des Abtauens fortgesetzt würde, könnte dies zu einer Beschädigung des Expansionsventils führen, da dieses nicht für einen während des Abtauvorgangs gegebenen Trockenlauf ausgelegt ist. Ferner würde eine während des Abtauvorgangs fortgesetzte Ansteuerung bzw. Regelung des Expansionsventils zu einer störenden Geräuschbelästigung führen.
Insofern ist es nötig, dass die dem elektronischen Expansionsventil zugeordnete Steuereinrichtung jeweils darüber informiert ist, wann ein Abtauvorgang beginnt und endet, da sie anderenfalls das Expansionsventil nicht in einen statischen Zustand bewegen kann. Wenn sich die Magnetventile zur Unterbrechung bzw. Umleitung des Kältemittelstroms während des Abtauvorgangs nahe bei der dem Expansionsventil zugeordneten Steuer- bzw. Regeleinrichtung befindet, kann zwischen dieser Einrichtung und den Magnetventilen eine elektrische Verbindung hergestellt werden, über welche die genannte Information übertragen wird. In vielen Anwendungsfällen sind jedoch - wie bereits erwähnt - die Magnetventile räumlich weit entfernt von der dem Expansionsventil zugeordneten Steuer- bzw. Regeleinrichtung angeordnet, so dass das Herstellen einer elektrischen Verbindung schwierig oder mit unverhältnismäßigem Aufwand verbunden ist. Ein derartiger Anwendungsfall ist beispielsweise in einem Supermarkt mit einer Vielzahl von Kühltruhen gegeben, wo sich zumindest ein elektronisches Expansionsventil mit seiner jeweils zugeordneten Steuereinrichtung innerhalb jeder Kühltruhe befindet und die Magnetventile zur Unterbrechung bzw. Umleitung des Kältemittelstroms zentral in einem Kontrollraum untergebracht sind, welcher sich vergleichsweise weit entfernt von den Kühltruhen befindet.

Eine Aufgabe der Erfindung besteht demzufolge darin, eine Steuereinrichtung der eingangs genannten Art derart weiterzubilden, dass zwischen den Magnetventilen zur Unterbrechung bzw. Umleitung des Kältemittelkreislaufs und der dem jeweiligen Expansionsventil zugeordneten Steuereinrichtung keine elektrische Verbindung zur Bewältigung des Abtauvorgangs benötigt wird.

Diese Aufgabe wird erfindungsgemäß durch die Merkmale des Anspruchs 1 und insbesondere dadurch gelöst, dass dem Expansionsventil auf seiner dem Verdampfer abgewandten Seite im Kältemittelkreislauf ein Temperatursensor vorgeschaltet ist, wobei die Steuereinrichtung zur Unterbrechung ihrer Steuerfunktion und zur Arretierung des Expansionsventils in einem statischen Zustand ausgelegt ist, wenn der Temperatursensor einen unter einem vorgegebenen Schwellwert liegenden Temperaturwert oder einen zumindest in einer vorgegebenen Weise sinkenden Temperaturverlauf liefert.

Die Erfindung macht sich somit die Erkenntnis zunutze, dass bei einer Unterbrechung oder Umleitung des Kältemittelstroms das in der Rohrleitung vor dem Expansionsventil vorhandene Kältemittel verdampft und somit eine Kühlwirkung entfaltet. Beim normalen Betrieb des Kältemittelkreislaufs außerhalb des Abtauvorgangs tritt in der Rohrleitung vor dem Expansionsventil kein Verdampfungsvorgang auf, da das Kühlmittel ausschließlich im Verdampfer verdampft und in der Rohrleitung vor dem Expansionsventil nur in flüssiger Form vorliegt. Insofern besitzt die Rohrleitung vor dem Expansionsventil vor und nach dem Abtauvorgang eine höhere Temperatur als zu Beginn des Abtauvorgangs. Diese den Abtauvorgang vom Normalbetrieb unterscheidende Temperaturdifferenz wird von dem erfindungsgemäß vorgesehenen Temperatursensor erfasst und an die Steuereinrichtung zum Ansteuern des Expansionsventils gemeldet, so dass die dem Expansionsventil zugeordnete Steuereinrichtung dazu in der Lage ist, zu erkennen, wenn ein Abtauvorgang beginnt.

Dieser Erkennungsprozess kann dabei stattfinden, ohne dass von den den Abtauvorgang letztlich auslösenden Magnetventilen irgendeine Information an die Steuereinrichtung des Expansionsventils übermittelt werden müsste. Wenn sich also die genannten Magnetventile beispielsweise in einem von Kühltruhen entfernten Kontrollraum befinden, könnten die erfindungsgemäß in den Kühltruhen vorgesehenen Temperatursensoren das Temperaturgefälle an der erwähnten Stelle der Rohrleitung des Kältemittelkreislaufs erfassen und an die ebenfalls in der jeweiligen Kühltruhe befindliche Steuereinrichtung der Expansionsventile melden, so dass die Steuereinrichtungen dann letztlich dafür sorgen können, dass die Expansionsventile in einen statischen Zustand bewegt werden.

Die erfindungsgemäß ausgebildeten Steuereinrichtungen zum Ansteuern der Expansionsventile können die Expansionsventile beispielsweise dann in einen statischen Zustand bewegen, wenn der erfindungsgemäß vorgesehene Temperatursensor einen unter einem vorgegebenen Schwellwert liegenden Temperaturwert liefert. Alternativ kann der genannten Vorgang jedoch auch dann ausgelöst werden, wenn der erfindungsgemäße Temperatursensor einen zumindest in einer vorgegebenen Weise sinkenden Temperaturverlauf liefert, so dass in diesem Fall nicht nur das Unterschreiten eines Schwellwerts, sondern vielmehr der zeitliche Verlauf des Absinkens der Temperatur im Bereich der Rohrleitung vor dem Expansionsventil als Kriterium für den Beginn des Abtauvorgangs herangezogen wird.

Bevorzugt ist es, wenn der erfindungsgemäße Temperatursensor dem Expansionsventil auf seiner dem Verdampfer abgewandten Seite im Kältemittelkreislauf unmittelbar vorgeschaltet wird, so dass der räumliche Abstand zwischen Temperatursensor und Expansionsventil möglichst gering ist. Auf diese Weise wird erreicht, dass die elektrischen Leitungen zwischen dem Temperatursensor und der dem Expansionsventil zugeordneten Steuereinrichtung weitestgehend entlang derselben Strecke verlegt werden können, wie die elektrischen Leitungen zwischen Expansionsventil und Steuereinrichtung. Ein zusätzlicher Aufwand für das Verlegen von Leitungen entfällt auf diese Art und Weise praktisch fast vollständig.

Das Expansionsventil kann während des Abtauvorgangs grundsätzlich in einem beliebigen statischen Zustand bewegt werden. Es kann sich dabei folglich um einen vollständig geöffneten, einen vollständig geschlossenen oder einen nur teilweise geöffneten bzw. geschlossenen Zustand handeln. Bevorzugt ist es jedoch, wenn das Expansionsventil während des Abtauvorgangs in einen Zustand bewegt wird, in welchem es vollständig geöffnet ist, da in diesem Fall ein Medium wie Heiß- oder Kaltgas, welches eventuell für das Abtauen des Verdampfers benutzt wird, ungehindert durch das Expansionsventil strömen kann.

Zum Ansteuern des Expansionsventils während des Normalbetriebs, also vor bzw. nach dem Abtauvorgang, kann zum Erfassen der Betriebsbedingungen des Verdampfers zwischen Expansionsventil und Verdampfer ein zweiter Temperatursensor und hinter dem Verdampfer ein dritter Temperatursensor vorgesehen sein, wobei die über die genannten Temperatursensoren gelieferten Werte an die Steuereinrichtung für das Expansionsventil gemeldet werden. Alternativ oder zusätzlich zum dritten Temperatursensor hinter dem Verdampfer kann auch ein Drucksensor eingesetzt werden.

Erfindungsgemäß kann die Steuereinrichtung auch derart ausgelegt sein, dass sie nicht nur zum Erkennen des Beginns eines Abtauvorgangs sondern auch zum Erkennen der Beendigung eines solchen Abtauvorgangs geeignet ist. Bei der Erkennung der Beendigung eines Abtauvorgangs kann die Steuereinrichtung dann den Arretierungszustand des Expansionsventils aufheben und im Anschluss daran wieder die normale Steuer- bzw. Regelfunktion des Expansionsventils übernehmen, die für das Kühlen bzw. Klimatisieren erforderlich ist. Bei der Beendigung eines Abtauvorgangs werden die Magnetventile zur Unterbrechung oder Umleitung des Kältemittelstroms derart angesteuert, dass der Kältemittelstrom wieder ungehindert durch den Kältemittelkreislauf fließen kann. Das Kältemittel strömt dann demzufolge auch wieder durch den Verdampfer, was dazu führt, dass sich bei dem zwischen Expansionsventil und Verdampfer angeordneten Temperatursensor und/oder bei dem dem Verdampfer im Kältemittelkreislauf nachgeordneten Temperatursensor ein zumindest in einer vorgegebenen Weise sinkender Temperaturverlauf einstellt. Dieser Temperaturverlauf oder das Unterschreiten eines Schwellwerts kann von der Steuereinrichtung detektiert werden, woraufhin der Arretierungszustand des Expansionsventils aufgehoben und die normale Steuerfunktion des Expansionsventils wieder aufgenommen wird. Alternativ oder zusätzlich zur genannten Überprüfung der Temperaturen kann auch der Druckanstieg an einem dem Verdampfer nachgeordneten Drucksensor detektiert werden, um vom Abtaumodus auf den Normalmodus umzuschalten.

Wenn für das genannte Umschalten nur oder auch der sinkende Temperaturverlauf betrachtet wird, kann ein Umschalten beispielsweise immer dann erfolgen, wenn innerhalb von wenigen Sekunden ein Temperaturabfall um mehrere Grad auftritt. Ein derartiger Temperaturabfall tritt nämlich in der Regel niemals während eines Abtauvorgangs, sondern nur nach dessen Beendigung auf, so dass er ein signifikantes Kriterium für die Beendigung des Abtauvorgangs darstellt. Typisch ist hierbei ein Abfallen der Temperatur um 3 bis 5° innerhalb von 1 bis 30 s.

Die Erfindung ist nicht auf die vorstehend erläuterte Steuereinrichtung beschränkt. Vielmehr bezieht sie sich auch auf Kälte- oder Klimaanlagen, in denen zumindest eine der genannten Steuereinrichtungen eingesetzt wird.

Weitere bevorzugte Ausführungsformen der Erfindung sind in den Unteransprüchen beschrieben.

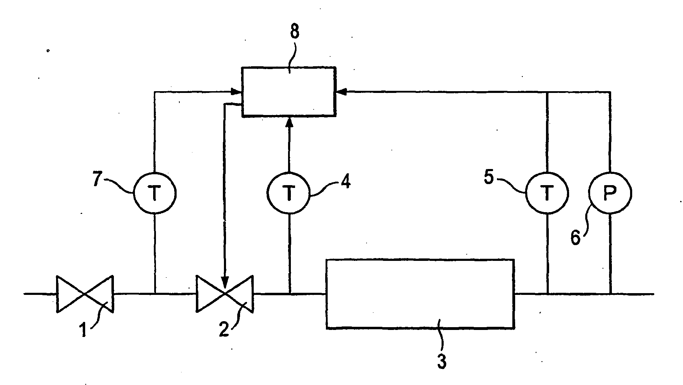

Die Erfindung wird nachfolgend anhand eines Ausführungsbeispiels unter Bezugnahme auf die Figur erläutert. In der Figur ist ein Blockschaltbild desjenigen Bereichs eines Kältemittelkreislaufs gezeigt, der die für die Funktion der Erfindung wichtigen Komponenten darstellt.

Im Kältemittelkreislauf sind einander in Strömungsrichtung des Kältemittels nachgeordnet ein Magnetventil 1, ein elektronisches Expansionsventil 2 sowie ein Verdampfer 3. Im Rahmen des normalen Kältemittelkreislaufs, der bei einer kühlenden bzw. klimatisierenden Wirkung des Verdampfers 3 gegeben ist, strömt das Kältemittel also in flüssiger Form zuerst durch das Magnetventil 1 und anschließend durch das elektronische Expansionsventil 2, woraufhin es im Verdampfer 3 verdampft wird.

Das elektronische Expansionsventil 2 befindet sich räumlich nahe beim Verdampfer 3, so dass beide Komponenten 2, 3 beispielsweise innerhalb einer Kühltruhe angeordnet werden können. Das Magnetventil 1 hingegen ist räumlich vergleichsweise weit vom elektronischen Expansionsventil 2 entfernt, so dass es beispielsweise in einem von einer Kühltruhe getrennt angeordneten Kontrollraum vorgesehen sein kann.

Zwischen dem Magnetventil 1 und dem elektronischen Expansionsventil 2 befinden sich keinerlei elektrische Leitungen oder datentechnische Verbindungen, sondern lediglich ein Rohr, durch welches Kühlmittel strömt.

In Strömungsrichtung ist dem Verdampfer ein Temperatursensor 4 vorgeschaltet und ein weiterer Temperatursensor 5 nachgeschaltet. Hinter dem Temperatursensor 5 ist weiterhin ein Drucksensor 6 angeordnet. Alle Sensoren 4, 5, 6 können sich beispielsweise ebenso wie der Verdampfer 3 und das elektronische Expansionsventil 2 innerhalb einer Kühltruhe befinden. Die Sensoren 4, 5, 6 liefern Temperatur- und Drucksignale an eine erfindungsgemäße Steuereinrichtung 8, welche beim Normalbetrieb der dargestellten Anordnung den jeweiligen Öffnungsgrad des elektronischen Expansionsventils 2 regelt. In üblicher Weise wird das elektronische Expansionsventil 2 dabei derart geregelt, dass innerhalb des Verdampfers 3 eine möglichst vollständige Verdampfung des dem Verdampfer 3 zugeführten Kühlmittels stattfindet.

Erfindungsgemäß ist dem elektronischen Expansionsventil 2 auf seiner dem Verdampfer 3 abgewandten Seite ein weiterer Temperatursensor 7 unmittelbar vorgeschaltet, welcher sich ebenfalls innerhalb einer Kühltruhe befinden kann. Dieser Temperatursensor 7 misst die Temperatur der Kühlmittelleitung bzw. des Kühlmittels unmittelbar vor dem elektronischen Expansionsventil und ist somit in der beschriebenen Weise dazu in der Lage, ein Abkühlen der Rohrleitung unmittelbar vor dem elektronischen Expansionsventil 2 an die Steuereinrichtung 8 zu melden.

Wenn beim Betrieb der in der Figur dargestellten Vorrichtung das Magnetventil 1 geschlossen wird, um auf diese Weise einen Abtauvorgang einzuleiten, führt dies zu einer Verdampfung von Kühlmittel im Bereich des dem elektronischen Expansionsventil 2 vorgeschalteten Temperatursensors 7. Nachdem die Steuereinrichtung 8 diese Abkühlung detektiert hat, bewegt sie das elektronische Expansionsventil 2 in einen statischen, vollständigen Öffnungszustand, so dass das elektronische Expansionsventil 2 während des Abtauvorgangs geschützt ist und gegebenenfalls das Durchströmen des Verdampfers 3 mit einem Abtaumedium ermöglicht.

Wenn nach dem Abtauvorgang das Magnetventil 1 wieder geöffnet wird, ergibt sich an den Temperatursensoren 4, 5 ein Temperaturabfall und am Drucksensor 6 ein Druckanstieg. Diese Temperatur- bzw. Druckänderungen können nun wiederum von der Steuereinrichtung 8 detektiert werden, was dann letztlich bewirkt, dass die Steuereinrichtung 8 wieder den normalen Regelbetrieb hinsichtlich des elektronischen Expansionsventils 2 aufnimmt.

### Bezugszeichenliste

- 1: Magnetfeld
- 2: elektronisches Expansionsventil
- 3: Verdampfer
- 4: Temperatursensor
- 5: Temperatursensor
- 6: Drucksensor
- 7: Temperatursensor
- 8: Steuereinrichtung

## Patentansprüche

1. Steuereinrichtung (8) zum Ansteuern zumindest einer Komponente einer Kälte- oder Klimaanlage mit einem Verdampfer (3), dem Verdampfer (3) im Kältemittelkreislauf vor- und/oder nachgeschalteten Sensoren (4, 5, 6) und einem elektronischen Expansionsventil (2), wobei die Steuereinrichtung (8) zur Beaufschlagung des Expansionsventils (2) in Abhängigkeit von von den Sensoren (4, 5, 6) gelieferten Signalen ausgelegt ist und
dem Expansionsventil (2) auf seiner dem Verdampfer (3) abgewandten Seite im Kältemittelkreislauf ein Temperatursensor (7) vorgeschaltet ist, **dadurch gekennzeichnet, dass** die Steuereinrichtung (8) zur Unterbrechung ihrer Steuerfunktion und zur Arretierung des Expansionsventils (2) in einem statischen Zustand ausgelegt ist, wenn der Temperatursensor (7) einen unter einem vorgegebenen Schwellwert liegenden Temperaturwert oder einen zumindest in einer vorgegebenen Weise sinkenden Temperaturverlauf liefert.

2. Steuereinrichtung nach Anspruch 1,
**dadurch gekennzeichnet,**
**dass** der Temperatursensor (7) dem Expansionsventil (2) auf seiner dem Verdampfer (3) abgewandten Seite im Kältemittelkreislauf unmittelbar vorgeschaltet ist.

3. Steuereinrichtung nach einem der vorhergehenden Ansprüche,
**dadurch gekennzeichnet,**
**dass** der statische Zustand des Expansionsventils (2) seinem Öffnungszustand entspricht.

4. Steuereinrichtung nach einem der vorhergehenden Ansprüche,
**dadurch gekennzeichnet,**
**dass** im Kältemittelkreislauf hinter dem Verdampfer (3) ein Drucksensor (6) vorgesehen ist.

5. Steuereinrichtung nach einem der vorhergehenden Ansprüche,
**dadurch gekennzeichnet,**
**dass** zwischen Expansionsventil (2) und Verdampfer (3) und/oder im Kältemittelkreislauf hinter dem Verdampfer (3) ein Temperatursensor (4, 5) vorgesehen ist.

6. Steuereinrichtung nach Anspruch 5 ,
**dadurch gekennzeichnet,**
**dass** die Steuereinrichtung (8) zur Aufhebung des Arretierungszustandes des Expansionsventils (2) und zur Wiederaufnahme ihrer auf das Expansionsventil (2) bezogenen Steuerfunktion ausgelegt ist, wenn der zwischen Expansionsventil (2) und Verdampfer (3) befindliche Temperatursensor (4) und/oder der dem Verdampfer im Kältemittelkreislauf nachgeordnete Temperatursensor (5) einen zumindest in einer vorgegebenen Weise sinkenden Temperaturverlauf liefern.

7. Steuereinrichtung nach einem der vorhergehenden Ansprüche,
**dadurch gekennzeichnet,**
**dass** im Kältemittelkreislauf vor dem Expansionsventil (2) ein Magnetventil (1) zur Unterbrechung oder Umleitung des Kältemittelkreislaufes angeordnet ist, welches sich insbesondere mehrere Meter vor dem Expansionsventil (2) befindet.

8. Kälte- oder Klimaanlage mit einer Steuereinrichtung nach einem der vorhergehenden Ansprüche.

9. Kälte- oder Klimaanlage nach Anspruch 8,
**dadurch gekennzeichnet,**
**dass** sie zum Abtauen des Verdampfers (3) mittels Heißgas, Kaltgas, Umgebungsluft oder mittels einer elektrischen Abtauheizung ausgelegt ist.

## Claims

1. A control device (8) for the control of at least one component of a refrigeration or air conditioning system comprising an evaporator (3), sensors (4, 5, 6) disposed upstream and/or downstream of the evaporator (3) in the coolant circuit and an electronic expansion valve (2), with the control device (8) being designed to act on the expansion valve (2) in dependence on signals delivered by the sensors (4, 5, 6) and with a temperature sensor (7) being disposed in the coolant circuit before the expansion valve (2) on its side remote from the evaporator (3), **characterized in that** the control device (8) is designed for the interruption of its control function and for the arresting of the expansion valve (2) in a static state when the temperature sensor (7) delivers a temperature value lying below a preset threshold value or a temperature development falling at least in a preset manner.

2. A control device in accordance with claim 1, **characterized in that** the temperature sensor (7) is disposed directly before the expansion valve (2) on its side remote from the evaporator (3) in the coolant circuit.

3. A control device in accordance with any one of the preceding claims, **characterized in that that** the static state of the expansion valve (2) corresponds to its open state.

4. A control device in accordance with any one of the preceding claims, **characterized in that** a pressure sensor (6) is provided in the coolant circuit after the evaporator (3).

5. A control device in accordance with any one of the preceding claims, **characterized in that** a temperature sensor (4, 5) is provided between the expansion valve (2) and the evaporator (3) and/or in the coolant circuit after the evaporator (3).

6. A control device in accordance with claim 5, **characterized in that** the control device (8) is designed for the cancellation of the arrested state of the expansion valve (2) and for the taking up again of its control function related to the expansion valve (2) when the temperature sensor (4) located between the expansion valve (2) and the evaporator (3) and/or the temperature sensor (5) disposed downstream of the evaporator in the coolant circuit deliver a temperature development falling at least in a preset manner.

7. A control device in accordance with any one of the preceding claims, **characterized in that** a solenoid valve (1) for the interruption or diversion of the coolant circuit is arranged in the coolant circuit before the expansion valve (2) and is in particular located a plurality of meters before the expansion valve (2).

8. A refrigeration or air conditioning system comprising a control device in accordance with any one of the preceding claims.

9. A refrigeration or air conditioning system in accordance with claim 8, **characterized in that** it is designed for the defrosting of the evaporator (3) by means of hot gas, cold gas, ambient air or by means of an electric defrost heating.

## Revendications

1. Système de commande (8) pour le pilotage d'au moins un composant d'une installation frigorifique ou d'une installation de climatisation comprenant un évaporateur (3), des capteurs (4, 5, 6) disposés dans le circuit de réfrigérant en amont et/ou en aval de l'évaporateur (3), et une soupape d'expansion électronique (2), ledit système de commande (8) étant conçu pour commander la soupape d'expansion (2) en fonction de signaux fournis par les capteurs (4, 5, 6), et un capteur de température (7) est prévu dans le circuit de réfrigérant en amont de la soupape d'expansion (2) sur son côté détourné de l'évaporateur (3),
**caractérisé en ce que** le système de commande (8) est conçu pour interrompre sa fonction de commande et pour bloquer la soupape d'expansion (2) dans une situation statique quand le capteur de température (7) fournit une valeur de température située au-dessous d'une valeur seuil prédéterminée ou une évolution de température en diminution au moins d'une manière prédéterminée.

2. Système de commande selon la revendication 1,
**caractérisé en ce que** le capteur de température (7) est prévu dans le circuit de réfrigérant directement en amont de la soupape d'expansion (2) sur son côté détourné de l'évaporateur (3).

3. Système de commande selon l'une des revendications précédentes,
**caractérisé en ce que** la situation statique de la soupape d'expansion (2) correspond à sa situation ouverte.

4. Système de commande selon l'une des revendications précédentes,
**caractérisé en ce qu'**un capteur de pression (6) est prévu dans le circuit de réfrigérants en aval de l'évaporateur (3).

5. Système de commande selon l'une des revendications précédentes,
**caractérisé en ce qu'**il est prévu un capteur de température (4, 5) entre la soupape d'expansion (2) et l'évaporateur (3) et/ou dans le circuit de réfrigérant en aval de l'évaporateur (3).

6. Système de commande selon la revendication 5,
**caractérisé en ce que** le système de commande (8) est conçu pour annuler la situation de blocage de la soupape d'expansion (2) et pour reprendre sa fonction de commande concernant la soupape d'expansion (2), lorsque le capteur de température (4) situé entre la soupape d'expansion (2) et l'évaporateur (3) et/ou le capteur de température (5) agencé dans le circuit de réfrigérant en aval de l'évaporateur fournissent une évolution de température qui diminue au moins d'une manière prédéterminée.

7. Système de commande selon l'une des revendications précédentes,
**caractérisé en ce qu'**une vanne électromagnétique (1) destinée à interrompre ou à dériver le circuit de réfrigérant est agencée dans le circuit de réfrigérant en amont de la soupape d'expansion (2), ladite vanne électromagnétique se trouvant en particulier plusieurs mètres en amont de la soupape d'expansion (2).

8. Installation frigorifique ou installation de climatisation comprenant un système de commande selon l'une des revendications précédentes.

9. Installation frigorifique ou installation de climatisation selon la revendication 8,
**caractérisé en ce qu'**elle est conçue pour le dégivrage de l'évaporateur (3) au moyen de gaz chauds, de gaz froids, d'air environnant, ou au moyen d'un chauffage électrique de dégivrage.
